# EUROPEAN PATENT APPLICATION

(11) **EP 4 793 788 A1**
(43) Date of publication of application: **19.08.2026**
(21) Application number: 26158139.1
(22) Date of filing: 12.02.2026
(51) Int. Cl.: G06F 16/182, G06F 16/188

(54) **HIGH PERFORMANCE OBJECT STORAGE**

(30) Priority: 13.02.2025 US 202563758025 P
(71) Applicant: Google LLC, Mountain View, CA 94043 (US)
(72) Inventor: MALONEY, Michael James, Mountain View, 94043 (US); SERENYI, Denis Matthew, Mountain View, 94043 (US); HORN, Webb Harrington, Mountain View, 94043 (US); TERRACE, Jeffrey Karl, Mountain View, 94043 (US); CARLON, Christopher James, Mountain View, 94043 (US); KITTRIDGE, Benjamin Chapin, Mountain View, 94043 (US); SEROV, Ilya, Mountain View, 94043 (US); MUELLER, Garrett Ryan, Mountain View, 94043 (US)
(74) Representative: Betten & Resch

(57) **Abstract**

Disclosed is an object storage system that can accept any number of write requests that add zero or more bytes to the end of the object. A write request may flush the data up to the current end of the object to make it durable and accessible for read operations. A write request may make the object permanently immutable.

## Description

### CROSS-REFERENCE TO RELATED APPLICATION

The present application claims priority to U.S. Provisional Application No. 63,758,025 filed February 13, 2025, the disclosure of which is hereby incorporated herein.

### BACKGROUND

Many customers want to move data intensive workloads to object storage due to advantages associated with disaggregation as well as scalability, durability, and cost. However, many of these workloads have characteristics of latency sensitivity and frequent read or write operations, which have traditionally not been a good fit for object storage. Examples include batch/streaming analytics, machine learning (ML) training and checkpointing, scale-out database architecture optimization, and media streaming.

Object storage was designed for serving static objects, then pulled in colder backup and archive use cases over time. Customers also try to run hotter workloads there, but find the performance and cost prohibitive. They often move to more complicated disk or file-based solutions.

### BRIEF SUMMARY

One aspect of the disclosure provides an object storage system that can accept any number of write requests that add zero or more bytes to the end of the object. A write request may flush the data up to the current end of the object to make it durable and accessible for read operations. A write request may make the object permanently immutable.

Another aspect of the disclosure provides an object storage system that accepts a write request that establishes an append session with an object. Subsequent write requests re-use the session and its state. For a single writer, if a new append session is established to an object that already had an append session established, the new session may take precedence and any further attempts to append from the original session may be rejected.

Another aspect of the disclosure provides an object storage system that accepts a read request that establishes a read session with an object. Subsequent read requests re-use the session and its state. Any number of read sessions may be established to the same object. A read session may be established to an object that is mutable. A reader may read bytes that have been flushed within a short consistency window. The consistency window may be instantaneous, or within a span of time between approximately several microseconds to several minutes.

Another aspect of the disclosure provides an object storage system that routes client requests to servers that are close to the physical storage. Servers may further refine the location by redirecting the client to servers that are closer, or where the object or bucket has moved to a different location.

### BRIEF DESCRIPTION OF THE DRAWINGS

Fig. 1 is a block diagram of an example latency reduction system for object storage according to aspects of the disclosure.
Fig. 2 illustrates an example of object fragments according to aspects of the disclosure.
Fig. 3 is an example sequence diagram illustrating a read operation for a first connection established between a client and the dataplane traffic server, according to aspects of the disclosure.
Fig. 4 is an example sequence diagram illustrating a read operation for a subsequent connection established between a client and the dataplane traffic server, according to aspects of the disclosure.
Fig. 5 is an example sequence diagram illustrating a write operation for a new object, according to aspects of the disclosure.
Fig. 6 is an example sequence diagram illustrating a write operation for an interrupted session, according to aspects of the disclosure.
Fig. 7 is an example sequence diagram illustrating write fencing for appendable objects, according to aspects of the disclosure.
Fig. 8 is a block diagram of another example of the latency reduction system for object storage with dataplane traffic servers at multiple physical storage locations for physical storage aware routing, according to aspects of the disclosure.
Fig. 9 is a block diagram illustrating an example bucket, according to aspects of the disclosure.
Fig. 10 is an example sequence diagram illustrating routing via a default physical storage location, according to aspects of the disclosure.
Fig. 11 is an example sequence diagram illustrating routing via object fragment list location, according to aspects of the disclosure.
Fig. 12 is a block diagram illustrating an example dataplane traffic server, according to aspects of the disclosure.

### DETAILED DESCRIPTION

The present disclosure describes a latency reduction system that provides a number of capabilities to a cloud storage platform. Such capabilities include appendable objects, opening an object session for read, opening an object session for writes, resuming an interrupted read or write object session, reads and writes over object sessions, object fragments, and a program for serving dataplane traffic for the latency reduction system.

With regard to appendable objects, a client can specify at creation time that it wants an appendable object, where writes can be added to an end of an existing object. Unlike standard objects, appendable objects appear in a namespace right away, and can be written to in small increments, with flushes as needed. For example, the increments may be as small as approximately 1 byte. The flush may guarantee that all prior writes are durable in the storage system. In this regard, all flushed data is stable on media, protected from loss, and readable. Any number of readers can read data as soon as it's flushed, even if the object has not yet been finalized. An object may be considered finalized when writes are blocked and the object is marked as immutable.

With regard to opening of an object, a client opens an object to get a session token and a list of endpoints that can be used to communicate with it. Session tokens allow for secure time-limited access to an object using the user's credentials. Very fine-grained routing and load balancing can be achieved with the endpoint list.

With regard to reads and writes over object sessions, each session represents an opening of an object, and is dedicated to one of either reads or writes. Messages can flow asynchronously in either direction on the stream, resulting in significant latency reductions.

With regard to the program for serving dataplane traffic for the latency reduction system, dataplane traffic servers coordinate authorization, the safe construction of session tokens for new read or write sessions, and validation of session tokens for resumed read or write sessions. The dataplane traffic server also coordinates reads and writes of physical storage media.

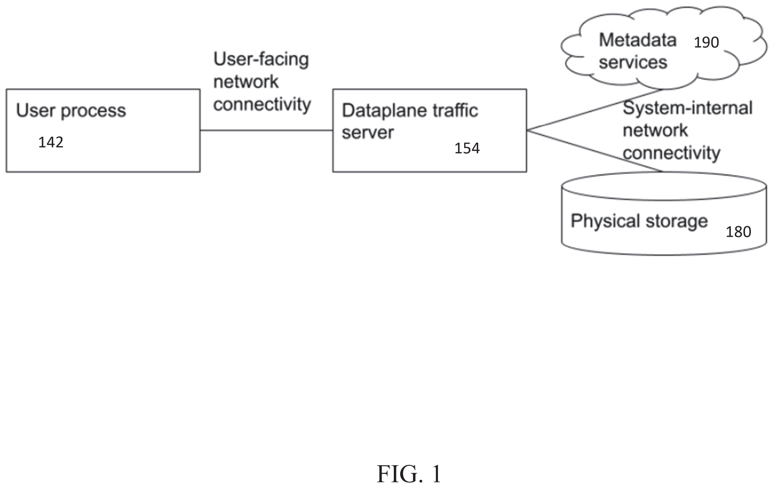

Fig. 1 is a block diagram of an example latency reduction system for object storage. The latency reduction system includes one or more dataplane traffic servers 154 in communication with a client, such as user process 142, and storage network, which may include physical storage 180 and metadata services 190. The client may be, for example, a virtual machine or other computing component. The metadata services may include, for example, a database containing object records, a database containing bucket records, an authentication/authorization system, encryption key management services, etc. While one dataplane traffic server 154 is shown in Fig. 1, it should be understood that multiple dataplane traffic servers may be included in the system. For example, physical regions may have one or more zones, with one or more cells within each zone. Each cell may be, for example, a datacenter or a cluster file system within a datacenter. According to some examples, each datacenter may have one or more dataplane traffic servers 154 therein.

The dataplane traffic server 154 may establish a session during which the user process 142 can perform transactions with respect to the physical storage 180. Each session may be an authenticated connection through which the user process 142 can write objects, append object fragments to objects, read objects, etc. Examples of such transactions are described in connection with the sequence diagrams below.

To open an object for read or write, the user process 142 may utilize a dataplane traffic server 154 based on a default physical storage location. For example, the default location may be a location of the object's bucket or the object's parent container.

The client opens a connection with the dataplane traffic server 154. For example, the connection may be a bidirectional stream. In the first read or write request, the dataplane traffic server 154 generates a session token by making a call to metadata services 190. In addition to returning that session token to the client, the dataplane traffic server may redirect the client to a different dataplane traffic server if it determines that the object's physical storage is better connected to that different dataplane traffic server. The dataplane traffic server may be selected based on its proximity to the physical storage. For example, traffic servers on the same network fabric as the physical storage may be considered to be better connected as compared to traffic servers on different network fabrics or further away. The client and routing systems do not know the physical location of the data when the connection to the dataplane traffic server is established. For example, routine server maintenance may have moved data around between physical storage machines. So upon a new connection, the dataplane traffic server checks that it is in the best known location for serving the *current* physical location of the data, and if not it will redirect the client to the correct location. Sometimes data for an object is spread across more than one physical location. In that case two traffic server locations may be equally valid, and the system will not issue a redirect to connections established to either location.

Subsequent requests are sent as messages over the connection, avoiding delays associated with synchronous requests having to wait for a response, and having to authorize those requests each time.

In some examples, appendable objects are written in object fragment format. Once created, these appendable objects can be open for read by other clients. Flushed writes, that have been permanently written to a final destination, can be read whether or not the appendable object is finalized.

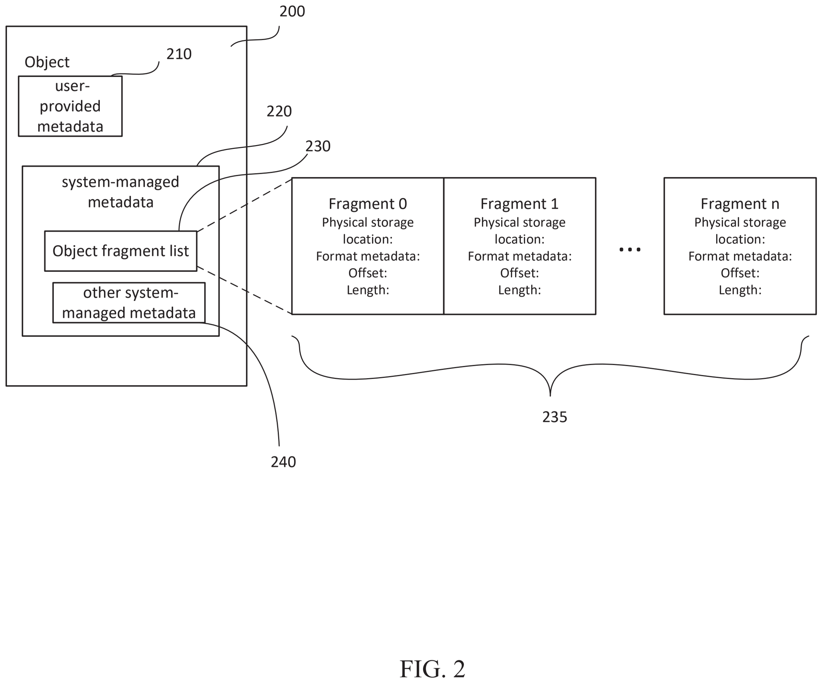

Fig. 2 illustrates an example of object fragments 235 in a list 230 in object metadata 220. An object fragment may be a distributed file storage file that stores data for one cloud storage platform object 200, where each fragment stores a range of object data. The object 200 may include user-provided metadata 210 and system-managed metadata 220. User-provided metadata may include, for example, contextual tags, content description, subjective data, classifications, etc. System-managed metadata 220 may include an object fragment list 230 and other system-managed metadata 240. The other system-managed metadata 240 may include, for example, timestamps for creation, modification, and/or access of the object 200, technical properties such as file size or type, access controls such as permissions and ownership, and system data such as error logs, usage tracking, etc. Fragments 235 for each object 200 may be stored in the object fragment list 230. By using object fragments, layers of metadata lookups may be bypassed. For example, while some systems storing chunks or shard files may typically require a two-level metadata lookup, where top-level metadata is used to find a second layer of metadata, use of object fragments may identify the metadata without requiring the top-level metadata lookup. Moreover, data may be appended to appendable objects.

An appendable object may be visible in the namespace as soon as it is created. It can be appended to with new bytes at any granularity, with any amount of bytes at a time. An appendable object is not technically tied to any specific bucket type (e.g. zonal, regional, multi-regional), storage class, or file format.

Appendable objects may support metadata updates, e.g. adding custom metadata, just like normal objects. An appendable object can be explicitly deleted or implicitly deleted by being overwritten. No further appends can be made to the object once it is deleted.

According to some examples, only a single client can have an object open for append at a time. Opening an object to append to it may invalidate any existing writer to the object. This mechanism of write fencing, where only one writer can write to an appendable object at a time, may be different from a traditional "write lock" in that a new writer can break exclusive ownership, causing writes from the former writer to fail. However, clients reading the file should be able to continue to read from an actively appended file, despite any changes of writers. Moreover, multiple different clients may read from one appendable object.

A client can finalize any appendable object, fencing out all previous writers and atomically marking the object as immutable. According to some examples, returning to Fig. 1, when a client such as user process 142 opens an object for append, a sequence number in the metadata may be incremented. The dataplane traffic server 154 may return the session token to the client, so that it can resume writing if its connection is broken. After the client opens the object for append, the dataplane traffic server 154 reads the current sequence number from the metadata 190. If the number in physical storage is non-existent or less than the serial number assigned at open, the dataplane traffic server will write back the new value to physical storage. If the number is equal it will accept writes to the object. If the object's serial number is greater than serial number assigned at open, the dataplane traffic server will close the file and return that it has been fenced out to the client.

In some examples, a zonal bucket enables consistent sub-millisecond appends and reads indefinitely. The storage can write to a zonal bucket. For example, the storage may open objects for write to create an appendable object, and the dataplane traffic server 154 will write to physical storage 180 in the same datacenter. These objects can be open for read by other clients, and flushed writes can be read whether or not the object is finalized.

Connections may originate from several different types of end users, such as from a customer virtual machine over an RPC-based connection framework, or from a dataplane front end proxying requests or other traffic. Each connection may correspond to one instance of an open object. The dataplane traffic server may periodically re-authorize the end user's access to a stream's object. For example, reauthorization may be attempted after a first timing threshold, such as several minutes. A second threshold may be set for completion of the reauthorization. If reauthorization does not succeed before the time corresponding to the second threshold elapses, the dataplane traffic server denies further access to corresponding object, and closes the stream.

According to some examples, routing may be performed using handles. The dataplane traffic server 154 may route requests to a respective cluster with backing storage via route lookup service (RLS). The dataplane traffic server 154 can redirect to different tasks. The dataplane traffic server 154 may also cache files and capabilities, maintaining stateful RPCs for open objects. The client has a handle, which may be an opaque blob with metadata. The dataplane traffic server 154 may refresh the metadata and perform authorization in the background.

Authentication may be performed without a handle. For example, when a client connects directly from the storage platform, the dataplane traffic server 154 authenticates the end user credentials by querying metadata services 190. When clients 142 are proxied via a connection to dataplane traffic server 154, there may already be a token in the request. The token may be utilized by the dataplane traffic server 154 during stream initialization.

Authentication and authorization may, in other examples, be performed with a session token. The session token may include relevant metadata for establishing the communication. Examples of such relevant metadata may include a location of the physical storage most recently known for the object fragments, a scope of authorization for determining if further lookups can be avoided, etc. Such authentication and authorization can be done by the dataplane traffic server with low latency. For example, such authentication and authorization can be performed by the dataplane traffic server using cryptographic signatures and encryption related security systems mediated by the metadata service. As another example, the token can be connected to metadata through peer-to-peer communication protocols (e.g., gossiping), caching, or other mechanisms.

The dataplane traffic server 154 may reauthenticate end user credentials to re-authorize access to the object, and in case authorization is granted, refresh the expiration of the session token.

When a resume write session message arrives, the dataplane traffic server will check if the token has expired. If it has not expired, any data may be dropped in requests until the next offset to be written is at that length.

After the data is appended, and once the object is finalized, the stream may be shut down.

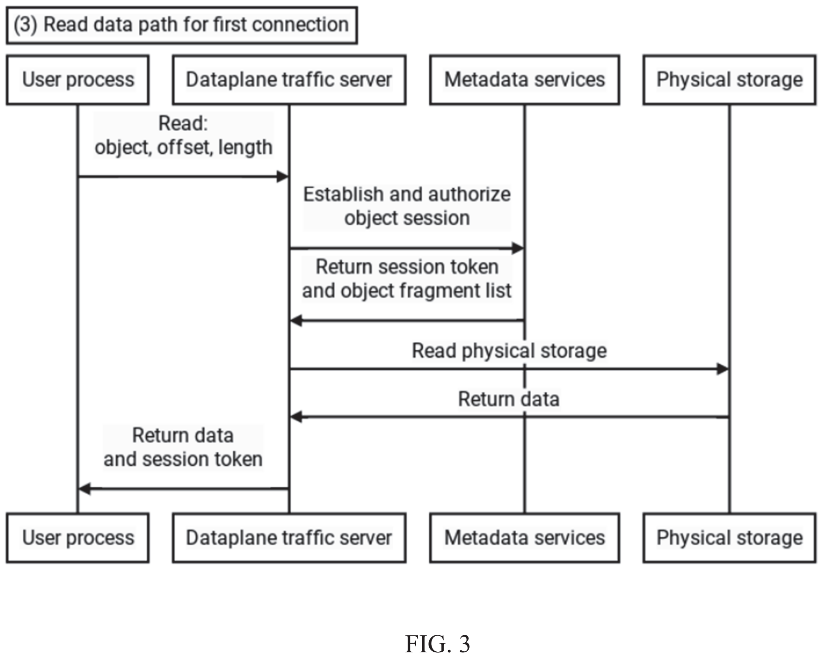

Fig. 3 is an example sequence diagram illustrating a read operation for a first connection established between a client and the dataplane traffic server. The client, shown as user process, sends a read request to the dataplane traffic server to read object data from physical storage. If the read request does not include a session token or other information indicating that a session was previously established, the dataplane traffic server creates the session. For establishing a session, the dataplane traffic server communicates with metadata services to initialize the object session and perform authorization. During authorization, the metadata services return a session token and an object fragment list. The object fragment list is stored in its permanent state in the metadata services. Once the session has been established, the dataplane traffic server can perform the requested read from the physical storage and return the read data to the client. The dataplane traffic server may also return the session token, such that the client can use the session token for further requests during the same session. By avoiding opening a new session, future reads during the same session can be performed faster and more efficiently.

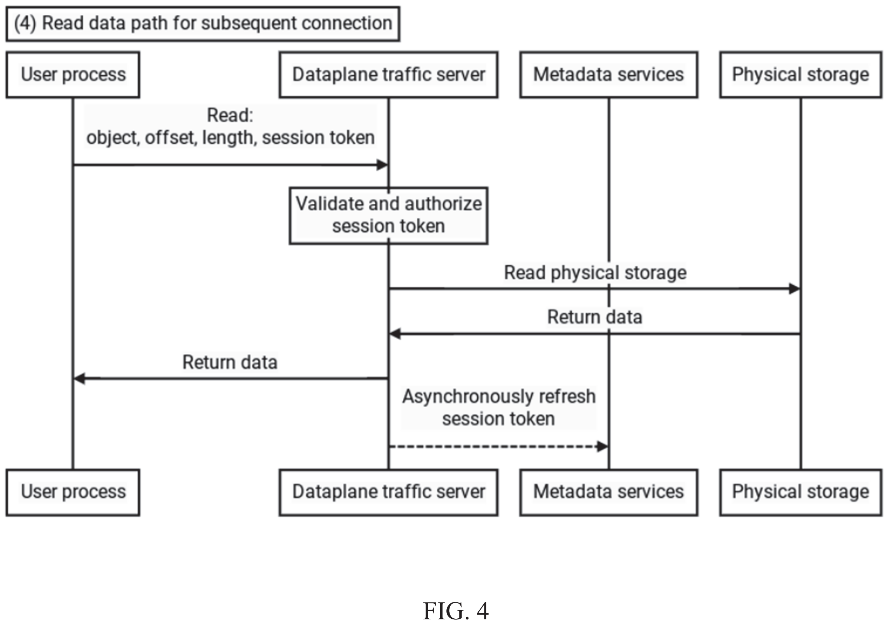

Fig. 4 is an example sequence diagram illustrating a read operation for a subsequent connection established between a client, shown as user process, and the dataplane traffic server. For example, the client may resume an existing session. As the client provides a session token with the read request, the dataplane traffic server does not need to communicate with the metadata services to establish the session. Rather, the dataplane traffic server can validate and authorize the session token provided by the client to resume the session. Then the dataplane traffic server can perform the read from the physical storage based on information in the session token and return the requested data to the client. In some examples, the session token may be asynchronously refreshed by the dataplane traffic server in communication with the metadata services, such that the refresh is asynchronous with client requests. For example, if the client does not have any reads to perform, but the first reauthorization threshold has been reached, the server may send back a new session token anyway.

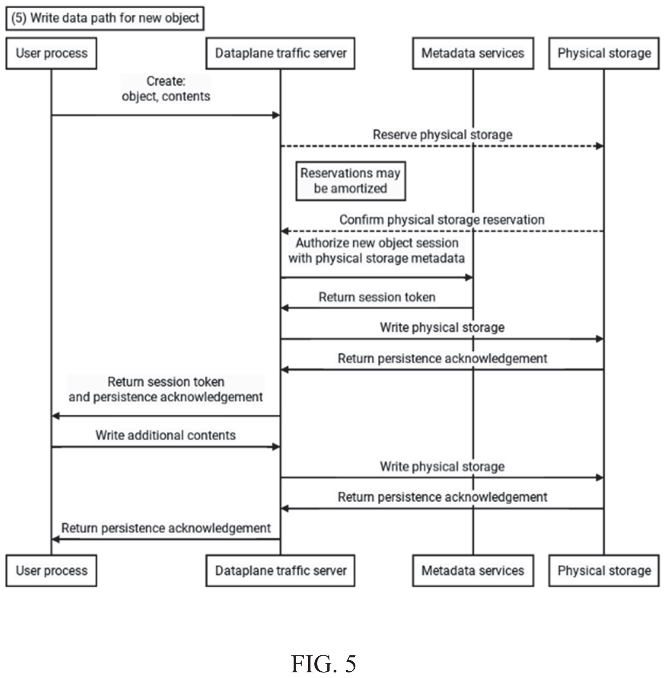

Fig. 5 is an example sequence diagram illustrating a write operation for a new object. The dataplane traffic server receives a request from client, shown as user process, to create an object. The request may include contents for the object. The dataplane traffic server may reserve physical storage space in the physical storage, and receive a confirmation regarding same. For example, the reservation can be a space reservation or a name reservation. Similar to creating a session as described in Fig. 3, the dataplane traffic server creates a session for the requested write. For example, the dataplane traffic server communicates with metadata services to authorize a new object session with physical storage metadata, and the metadata services returns a session token, which the dataplane traffic server forwards to the client. The dataplane traffic server writes to the physical storage, and may receive an acknowledgment that may also be returned to the client. The client may send additional write requests during the same session. As the session has already been established, such additional write requests may be honored by the dataplane traffic server by directly writing to the physical storage, without further involvement of the metadata services. In some examples, timing for the session may be bounded, such as by the reauthorization threshold or an idleness threshold. Such timing bounds may be configurable.

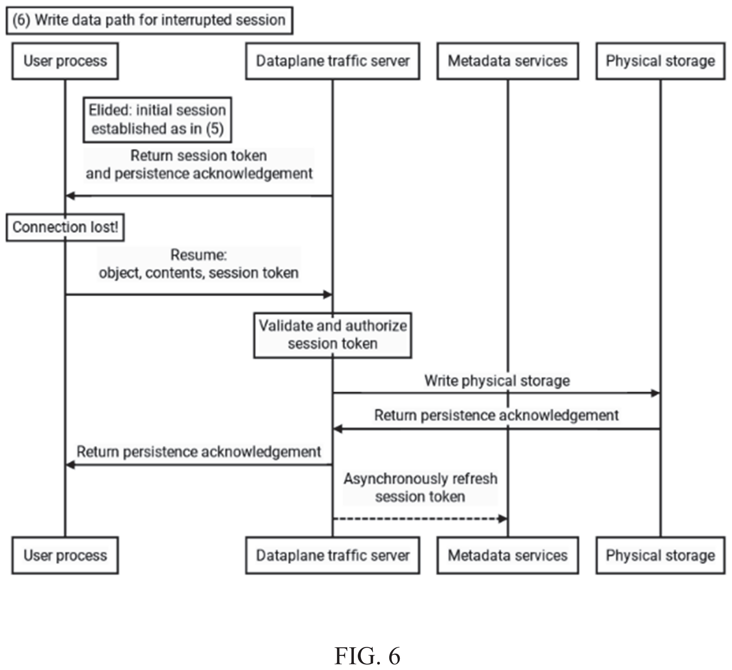

Fig. 6 is an example sequence diagram illustrating a write operation for an interrupted session. For example, after the write session was established as described above in connection with Fig. 5, the connection between the client, shown as user process, and the dataplane traffic server may have been lost. When the client resumes the connection to request additional writes, it sends the session token received during the previous session. The dataplane traffic server validates and authorizes the session token, and if successful, performs the requested write to the physical storage. The dataplane traffic server returns an acknowledgement of the write to the client. Because the client already has the session token, the dataplane traffic server does not need to provide it again.

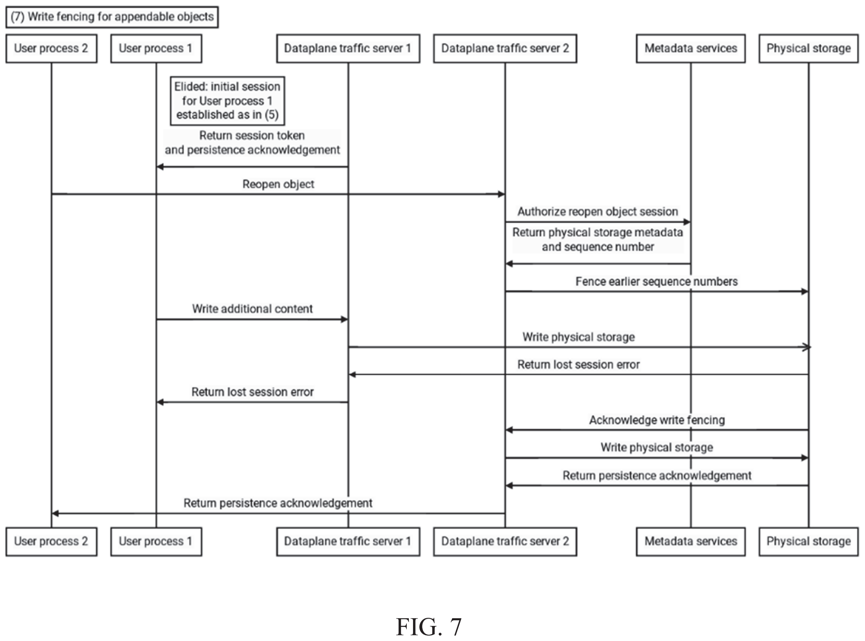

Fig. 7 is an example sequence diagram illustrating write fencing for appendable objects. In this example, two clients, illustrated as user process 1 and user process 2, are sending write requests to the same physical storage for writing to the same object. Each client may have previously established a session. The first client performs a write, and around the same time or shortly thereafter the second client attempts to reopen the object being written to by the first client. The requests from the first and second clients may be handled by first and second dataplane traffic servers, respectively. The second dataplane traffic server, in handling the write request from the second client, requests authorization from metadata services to reopen the object session. The metadata services returns physical storage metadata and a sequence number. The sequence number may be a number incremented in the metadata services when a client opens an object for append. After opening a file storage file for append, the dataplane traffic server will read the current sequence number from the metadata. The dataplane traffic server will fence earlier sequence numbers when performing the write requested by the second client. Accordingly, when writes from the first client are subsequently received at the physical storage, they will be prohibited by the physical storage because the sequence number associated with such writes from the first client will be less than the sequence number associated with the writes from the second client which are more recent. As such, the physical storage may return an error, such as a lost session error, to the first dataplane traffic server which forwards the error to the first client. In some examples, the physical storage may send an indication or acknowledgement of the write fencing, in which the writes from the first client were prohibited, to the second dataplane traffic server. The physical storage may also send an acknowledgement of successful write to the second dataplane traffic server, which forwards the acknowledgement to the second client.

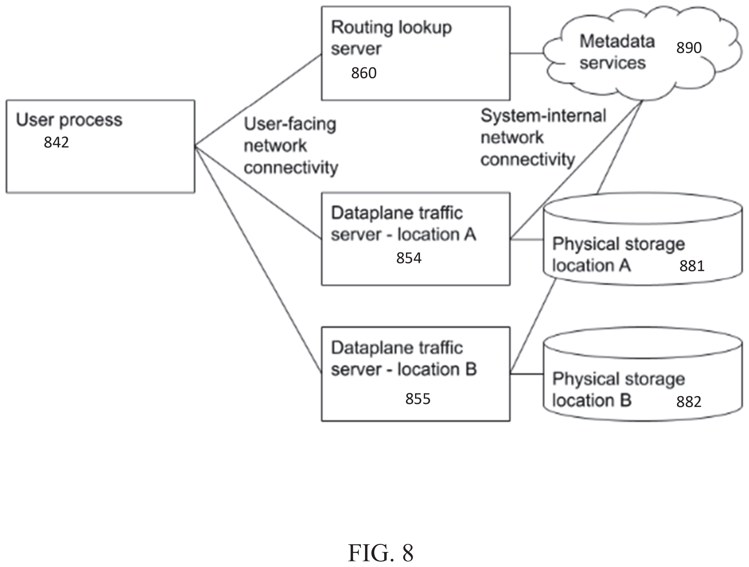

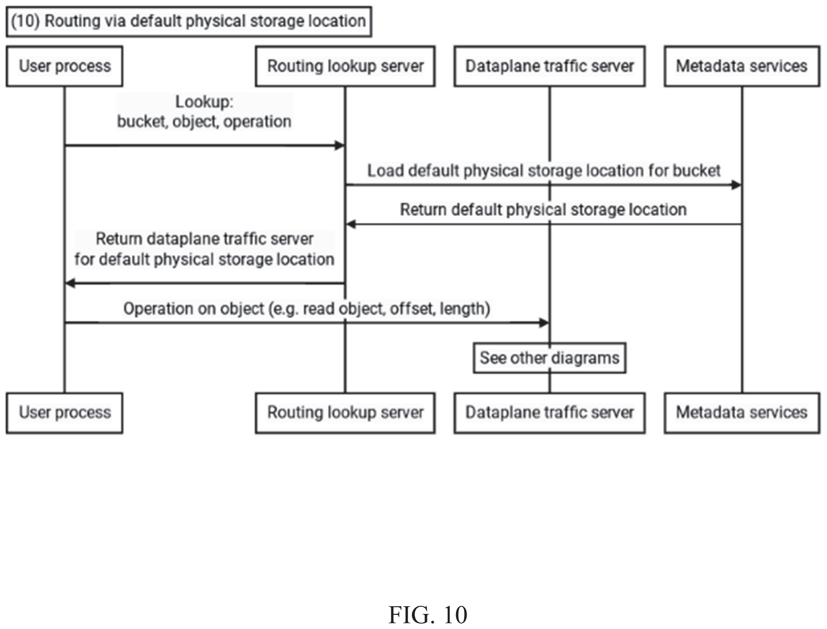

Fig. 8 is a block diagram of another example of the latency reduction system for object storage with dataplane traffic servers 854, 855 at multiple physical storage locations for physical storage aware routing. As shown, each of physical storage locations 881, 882 may reside at different geographical locations, and may each be associated with a distinct dataplane traffic server 854, 855 at the respective geographical locations. Both dataplane traffic servers 854, 855 and physical storages 881, 882 are associated with metadata services 890 and a route lookup server 860. While one metadata service 890 is illustrated, multiple metadata services can be included. The routing lookup server 860 communicates with the metadata services 890 to coordinate which dataplane traffic server the client, shown as user process 842, communicates with. Moreover, both dataplane traffic servers 854, 855 and physical storages 881, 882 are accessible by the same client or user process 842. Routing of requests from the client to a particular dataplane traffic server or physical storage are described in Figs. 10-11 below. Such routing applies for initial session creation, as well as for resuming previous sessions.

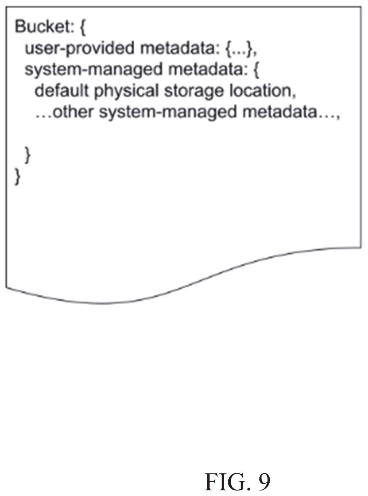

Fig. 9 is a block diagram illustrating an example bucket. Each bucket may be a data structure, such as a container, storing objects. The bucket may store objects according to physical storage location, such as zone, region, or multiple regions. The objects may be stored in a non-hierarchical structure. Each bucket may be associated with an access or security policy, allowing control over creation, reads, writes, appends, or deletion of objects in the bucket. Each bucket may store multiple versions of the objects. Bucket metadata has physical storage information. In some examples, it may include a default physical storage location if no other storage location for an object is specified.

Fig. 10 is an example sequence diagram illustrating routing via a default physical storage location. The client, illustrated as user process, performs a lookup using the route lookup server. Performing the lookup may include submitting a request identifying a bucket, object, and/or operation to be performed. The routing lookup server will use the bucket, such as illustrated in Fig. 9, to obtain from the metadata services the default physical storage location for the bucket. The route lookup server returns the dataplane traffic server corresponding to the default physical storage location for the bucket, such that the user process can send the transaction request for the object to the dataplane traffic server identified by the route lookup server. Accordingly, read and write transactions can be performed by the client and the dataplane traffic server as described in the sequence diagrams above.

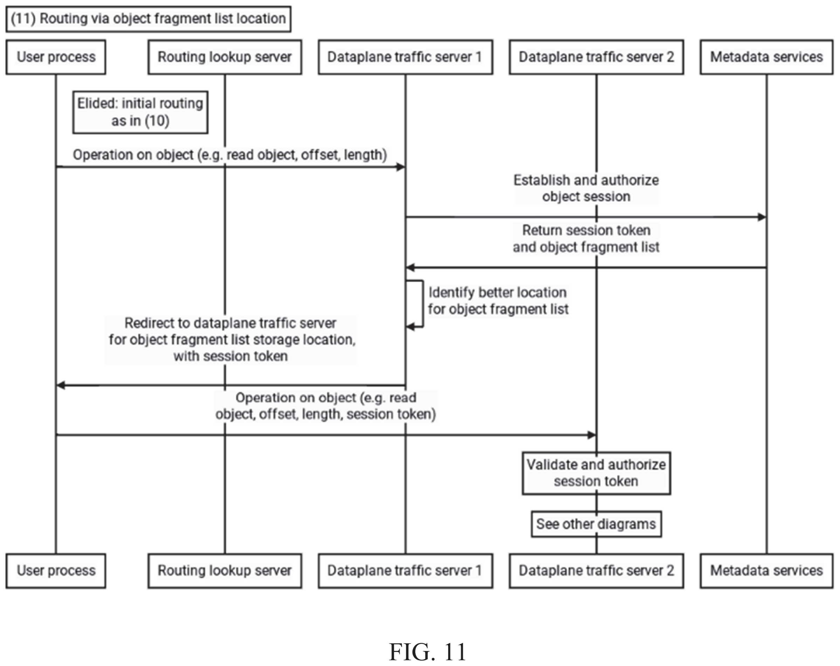

Fig. 11 is an example sequence diagram illustrating routing via object fragment list location. This relates to a scenario where the object's physical location does not match the buckets' default physical location. In that scenario, the first dataplane traffic server receiving the request may determine that it is not the best dataplane traffic server to handle the request. Accordingly, the first dataplane traffic server may identify another better location for the object fragment list, and may redirect the requests such that they can be handled by a second dataplane traffic server in the other better location. For example, the first dataplane traffic server can communicate to the client an identification of the second dataplane server in the other better location. The better location may be, for example, physically closer. In some examples, this communication can include a session token for use by the client in connecting with the second dataplane traffic server. Accordingly, the second dataplane traffic server can create or resume the session by validating the session token received from the client.

For object fragment lists (OFLs) with more than one fragment, there is a risk that two streams are running concurrently, and one of them has a newer view of the OFL than the other which includes additional fragments. For example, if Client A has Stream A open to write, and the stream gets disconnected, and then Client A opens a new Stream B using resume write session, using the OFL as known at disconnect time, Stream A sees that it is time to roll to a new fragment. Then, Stream A fills the prior fragment to exactly the max size and Stream A attempts to insert the new fragment into the metadata services. Stream B performs takeover, opening all unfinalized fragments, the last of which is at the max size, and Stream B attempts to insert a new fragment into the metadata services. One possible protection is that the attempt by only one of Stream A or Stream B to insert the new fragment into the metadata services can succeed. According to some examples, explicit ordering across streams which update the OFL may be obtained by appending new fragments at a specific index, rather than implicitly at the "end." The specific index may be, for example, a largest known index + 1. This guarantees a single stream will win in any race to define which file storage file comes "next" in the file. For example, Stream A and Stream B both have a view of the indices with largest == N. Because indices are dense monotonically increasing integers, both Stream A and Stream B would attempt to add a fragment at index N+1. The protection would guarantee that at most one of Stream A or Stream B will succeed at that addition. Moreover, to ensure that once a fragment which is in the OFL has been written to, no earlier fragments receive any further writes, it may be required that the OFL contains at most one unfinalized file storage file. Another approach would be for operations, such as to resume a write session or to takeover an append, to finalize all known fragments and insert a single new fragment before issuing any writes. Another approach is to enforce a precise file size at fragment creation time, and to require the dataplane traffic server to completely fill a fragment before writing any bytes to the next fragment. That guarantees that all dataplane traffic servers will attempt to roll over to a new fragment at exactly the same byte offset, and will then contend on either the metadata services or the next file's writer exclusion. For example, writer fencing may be enforced either at the fragment file level for index N, if the file is not at max length, or by the database insertion of index N+1, if the file is exactly at max length. Either one is sufficient to protect the consistency of the system.

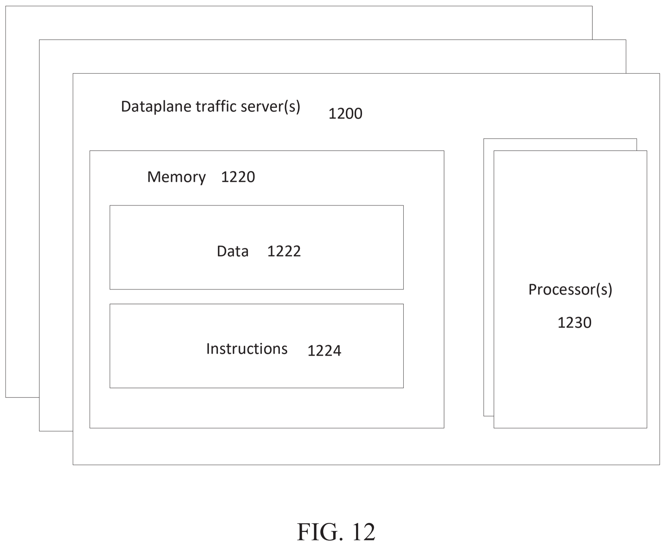

Fig. 12 is a block diagram illustrating an example dataplane traffic server 1200. The dataplane traffic server 1200 may include hardware configured to open and maintain sessions for efficient reads and writes to physical storage, including appending object fragments to objects. According to one example, the dataplane traffic server 1200 may reside within and handle connections with storage devices within a particular datacenter. According to other examples, the dataplane traffic server 1200 may be coupled to one or more datacenters, such as through a network, and may manage operations of multiple datacenters. In other examples, multiple dataplane traffic servers 1200 may reside within a single datacenter.

Each datacenter may include one or more computing and/or storage devices, such as databases, processors, servers, shards, cells, or the like. In some examples, the computing/storage devices in the datacenter may have different capacities. For example, the different computing devices may have different processing speeds, workloads, etc. It should be understood that each datacenter may include any number of computing/storage devices, and that the number of computing/storage devices in a first datacenter may differ from a number of computing/storage devices in a second datacenter. Moreover, the number of computing devices in each datacenter 580 may vary over time, for example, as hardware is removed, replaced, upgraded, or expanded.

In some examples, the dataplane traffic server 1200 may communicate with the computing/storage devices in the datacenter, and may facilitate transactions between remote clients and the physical storage. The dataplane traffic server 1200 may contain a processor 1230, memory 1220, and other components typically present in server computing devices. The memory 1220 can store information accessible by the processor 1230, including instructions 1224 that can be executed by the processor 1230. Memory 1220 can also include data 1222 that can be retrieved, manipulated or stored by the processor 1230. The memory 1220 may be a type of non-transitory computer readable medium capable of storing information accessible by the processor 1230, such as a hard-drive, solid state drive, tape drive, optical storage, memory card, ROM, RAM, DVD, CD-ROM, write-capable, and read-only memories. The processor 1230 can be a well-known processor or other lesser-known types of processors. Alternatively, the processor 1230 can be a dedicated controller such as an ASIC.

The instructions 1224can be a set of instructions executed directly, such as machine code, or indirectly, such as scripts, by the processor. In this regard, the terms "instructions," "steps" and "programs" can be used interchangeably herein. The instructions 1224 can be stored in object code format for direct processing by the processor, or other types of computer language including scripts or collections of independent source code modules that are interpreted on demand or compiled in advance.

The data 1222 can be retrieved, stored or modified by the processor 1230 in accordance with the instructions. For instance, although the system and method is not limited by a particular data structure, the data 1222 can be stored in computer registers, in a relational database as a table having a plurality of different fields and records, or XML documents. The data 1222 can also be formatted in a computer-readable format such as, but not limited to, binary values, ASCII or Unicode. Moreover, the data 1222 can include information sufficient to identify relevant information, such as numbers, descriptive text, proprietary codes, pointers, references to data stored in other memories, including other network locations, or information that is used by a function to calculate relevant data.

Although Fig. 12 functionally illustrates the processor 1230 and memory 1220 as being within the same block, the processor 1230 and memory 1220 may actually include multiple processors and memories that may or may not be stored within the same physical housing. For example, some of the instructions 1224 and data 1222 can be stored on a removable CD-ROM and others within a read-only computer chip. Some or all of the instructions and data can be stored in a location physically remote from, yet still accessible by, the processor. Similarly, the processor can actually include a collection of processors, which may or may not operate in parallel.

While the foregoing aspects have been described primarily with reference to a storage system, it is explicitly contemplated that the embodiments and features described herein relate equally to a corresponding method for operating such a system, a computer program comprising instructions which, when the program is executed by a computer, cause the computer to carry out the steps of said method, and a non-transitory computer-readable storage medium having stored thereon such a computer program. Accordingly, any disclosure relating to functional features of the storage system shall be understood to provide a basis for corresponding method steps and computer-implemented instructions.

Unless otherwise stated, the foregoing alternative examples are not mutually exclusive, but may be implemented in various combinations to achieve unique advantages. As these and other variations and combinations of the features discussed above can be utilized without departing from the subject matter defined by the claims, the foregoing description of the embodiments should be taken by way of illustration rather than by way of limitation of the subject matter defined by the claims. In addition, the provision of the examples described herein, as well as clauses phrased as "such as," "including" and the like, should not be interpreted as limiting the subject matter of the claims to the specific examples; rather, the examples are intended to illustrate only one of many possible embodiments. Further, the same reference numbers in different drawings can identify the same or similar elements.

## Claims

1. A system, comprising:
one or more storage entities configured to store files;
one or more processors in communication with the one or more storage entities, the one or more processors configured to:
receive a request from a client to perform a transaction with respect to an object corresponding to one of the files in the one or more storage entities;
open a connection between the client and the one or more storage entities through the one or more processors, wherein opening the connection comprises establishing and authorizing an object session with metadata services;
receive, from the metadata services, a session token for the object session and an object fragment list for the one or more storage entities;
execute the transaction; and
return a confirmation of the transaction and the session token to the client.

2. The system of claim 1, wherein the one or more processors are configured to ensure that append requests are honored from only one client at a given time, optionally
wherein ensuring that append requests are honored from only one client at a time comprises closing an existing write session from a first client if a subsequent write session is started by a second client.

3. The system of claim 1 or 2, wherein the one or more processors are configured to maintain the connection open for a predetermined period of time during which further append requests can be honored, or wherein the one or more processors are configured to automatically close the connection after the predetermined period of time, or wherein the one or more processors are configured to reopen, using the session token, a closed connection when further transaction requests are received, without repeating the authorizing with the metadata services.

4. The system of one of claims 1 to 3, wherein the transaction comprises a write transaction to append data to the object; and wherein the one or more processors are configured to:
determine a portion of the object to which the data should be appended; and
append the data at the determined portion of the object.

5. The system of claim 4, wherein the determined portion is at a tail end of the object.

6. The system of claim 4 or 5, wherein after appending the data the object is finalized such that no further data can be appended, optionally
wherein finalizing the object is performed manually by user request or automatically after a predetermined period of time.

7. The system of one of claims 1 to 6, wherein the transaction requests are routed to processors physically closest to a physical storage corresponding to the request, optionally
wherein the system comprises multiple processors in different locations, and wherein a first of the one or more processors are configured to, upon receiving the transaction request:
determine if the transaction request is directed to a storage location associated with a second processor in a different location than the first processor; and
redirect the transaction request to the second processor.

8. The system of one of claims 1 to 7, wherein the confirmation of the transaction comprises an acknowledgement of a successful write or data requested in a read transaction.

9. A method, comprising:
receiving, at one or more processors in communication with one or more storage entities storing files, a request from a client to perform a transaction with respect to an object corresponding to one of the files in the one or more storage entities;
opening a connection between the client and the one or more storage entities through the one or more processors, wherein opening the connection comprises establishing and authorizing an object session with metadata services;
receiving, from the metadata services, a session token for the object session and an object fragment list for the one or more storage entities;
executing the transaction; and
returning a confirmation of the transaction and the session token to the client.

10. The method of claim 9, comprising honoring append requests from only one client at a given time by closing an existing write session from a first client if a subsequent write session is started by a second client.

11. The method of claim 9 or 10, comprising maintaining the connection open for a predetermined period of time during which further append requests can be honored, and automatically closing the connection after the predetermined period of time.

12. The method of one of claims 9 to 11, wherein the transaction comprises a write transaction to append data to the object, the method further comprising:
determining a portion of the object to which the data should be appended; and
appending the data at the determined portion of the object.

13. The method of claim 12,
wherein the determined portion is at a tail end of the object; and/or
wherein the method further comprises finalizing the object after appending the data such that no further data can be appended.

14. A non-transitory computer-readable medium storing instructions executable by one or more processors for performing the method of one of claim 9 to 13.

15. A computer program comprising instructions which, when the program is executed by a computer, cause the computer to carry out the method of one of claims 9 to 13.
